# EUROPEAN PATENT APPLICATION

(11) **EP 1 362 745 A2**
(43) Date of publication of application: **19.11.2003**
(21) Application number: 03076448.4
(22) Date of filing: 14.05.2003
(51) Int. Cl.: B60R 16/02

(54) **Electronic management system for lighting units and auxiliary services for trailers and semi-trailers**

(30) Priority: 17.05.2002 IT MI20021063
(71) Applicant: O.E.M. S.r.l., 24020 Torre Boldone (Bergamo) (IT)
(72) Inventor: Porta, Antonio, 24060 Gandosso (Bergamo) (IT)
(74) Representative: Coppo, Alessandro

(57) **Abstract**

An electronic management system for lighting units and auxiliary services for trailers and semi-trailers, comprising a first master unit (15), arranged at the front of the trailer, in which there are the connectors (16) for the connection to the tractor; the master unit (15) is also electrically connected, by means of a cable (20) with three conductors, to a second slave unit, positioned at the back of the trailer, which includes a series of electrical connectors (22, 23, 24) to the optical groups or lights (12, 13) of the trailer and to the self-steering and lifting electrovalves. In particular, a metal strip with two conductors 18 is used, which crosses the perimeter of the trailer, to which the side-markers (10) and the rear markers (11) of the aforementioned trailer are electrically connected, by means of suitable connectors (21).

## Description

The present invention refers to an electronic management system for lighting units and auxiliary services for trailers and semi-trailers.

More specifically, the invention concerns an electrical system for trailers and semi-trailers managed by an innovative ADR electronic system and it is mainly intended for manufacturers, both Italian and foreign, of trailers and semi-trailers for industrial and commercial vehicles.

Currently, the operations relative to the electrical connections of the units on trailer and semi-trailers for industrial vehicles involve substantial complications, above all from the point of view of the number of connections to be made and, therefore, of electrical conductors or wires to be passed.

Moreover, there are different sized trailers and, consequently, currently as many electrical systems of different lengths are realised, each of which has its own code, its own warehouse and its own management.

Such situations consequently determine low reliability of the units, with further drawbacks deriving from slow diagnostics which are difficult to understand.

In the aforementioned requirements, the purpose of the present invention is therefore, that of avoiding the aforementioned drawbacks and, in particular, that of realising an electronic management system for lighting units and auxiliary services for trailers and semi-trailers, which allows the electrical systems of said trailers to be simplified, from the point of view of the number of electrical connections and wires to pass, so as to reduce the labour time and cost, as well as the overall realisation costs of the unit itself.

Another purpose of the present invention is that of realising an electronic management system for lighting units and auxiliary services for trailers and semi-trailers, which allows a reduced series of codes associated with each unit produced to be managed, at the same time reducing the number of electrical systems to be installed on each trailer.

A further purpose is that of realising an electronic management system for lighting units and auxiliary services for trailers and semi-trailers, which allows the reliability of the units to be increased, also allowing diagnostics which are fast and easy to understand to be realised.

The last but not least purpose of the invention is that of realising an electronic management system for lighting units and auxiliary services for trailers and semi-trailers which is particularly precise and reliable, in an extremely simple manner and at relatively low costs, in virtue of the advantages achieved.

These purposes according to the present invention are accomplished by realising an electronic management system for lighting units and auxiliary services for trailers and semi-trailers, according to claim 1, to which we refer for the sake of brevity.

Advantageously, the system according to the present invention foresees easy and fast assembly and management of a single electrical system for all of the trailers and semi-trailers produced. New outputs and inputs can also easily be added to the unit for possible future devices.

Other special characteristics of the system object of the invention are relative to particularly "intelligent" uses of the electrical system since, in the case in which a bulb blows, the aforementioned unit can easily replace it with another function.

Moreover, the system can directly inform the operator of possible failures of bulbs or electrovalves, by means of an indicator panel positioned in a cabin, which allows the type of failure to be highlighted in detail. Alternatively, the failure can be indicated by means of a simple pilot light and/or a sound alarm.

Further characteristics and advantages of an electronic management system for lighting units and auxiliary services for trailers and semi-trailers, according to the present invention, shall become clearer from the following description, given as an example and not for limiting purposes, referring to the attached schematic drawings, in which:
- figure 1 shows an overall block diagram of an electronic management system for lighting units and auxiliary services for trailers and semi-trailers, according to the present invention;
   figure 2 is a functional block diagram of a first electronic unit used in the electronic management system for trailers and semi-trailers, according to the present invention;
- figure 3 is a functional block diagram of a second electronic unit used in the electronic management system for trailers and semi-trailers, according to the present invention.

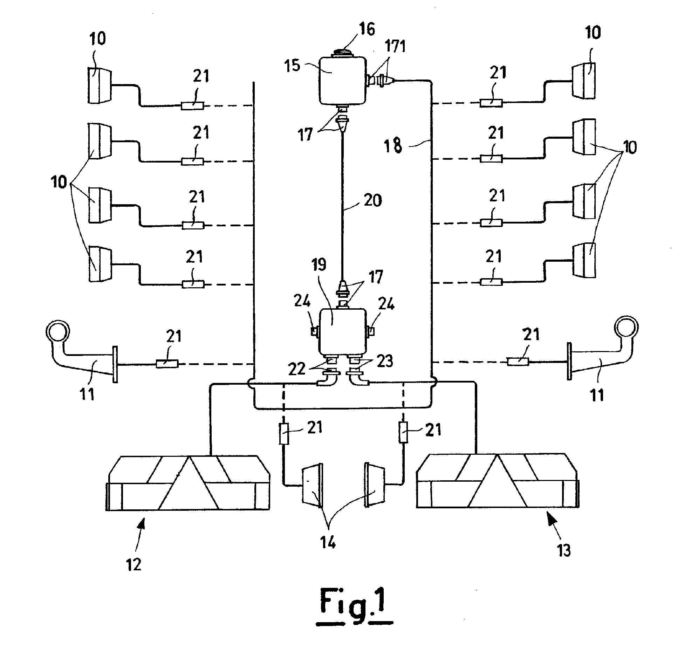

With particular reference to figure 1, which shows an overall diagram of an electrical system (lights and auxiliary services) installed on trailers and semi-trailers in general, the side-markers of the trailer are generally indicated with 10, the back-markers of such a trailer are generally indicated with 11, whereas the left and right lights are generically respectively indicated with 12 and 13, and the number plate lights are indicated with 14.

The management system for the lighting unit and auxiliary services for trailers, according to the present invention, is made up, in particular of a master unit 15, arranged at the front end of the trailer, inside of which there are electrical connectors (generically indicated with 16 in figure 1) for the connection to the tractor of the trailer.

From the master unit 15 also depart the four-way connectors 171 capable of being used for the electrical connection of the side-markers 10. In particular, the aforementioned side markers 10 are electrically connected, through a derivation terminal, to a metal strip 18 with two conductors (ADR cable), which runs along the entire perimeter of the trailer.

Moreover, the various connectors, generally indicated with 21, for the side markers 10, the back-markers 11 and the number plate lights 14, allow the electrical connection to the metal strip with two wires 18.

The master unit 15 is also connected, through suitable connectors 17, to a further unit 19, of the slave type, by means of a three pole connection 20 (ADR cable).

The slave unit 19, placed at the back of the trailer, is connected to the master unit 15 by means of the three pole cable generically indicated with 20 and carries a series of connectors for the electrical connection to further apparatuses.

In particular, the aforementioned slave unit 19 includes a first series of connectors 22, to which the left light or optical group 12 is connected, and a second series of connectors 23, to which the right light or optical group of the trailer 13 is electrically connected.

There are also further connectors, generically indicated with 24, applied to the slave unit 19, capable of being used for the connection of the self-steering and lifting electrovalves of the trailer and there can finally be at least two auxiliary outputs and an input of the ON/OFF type.

In preferred but not limiting embodiments of the present invention, the master unit 15 includes a series of electronic apparatuses suitable for managing the overall electronic unit of the entire trailer.

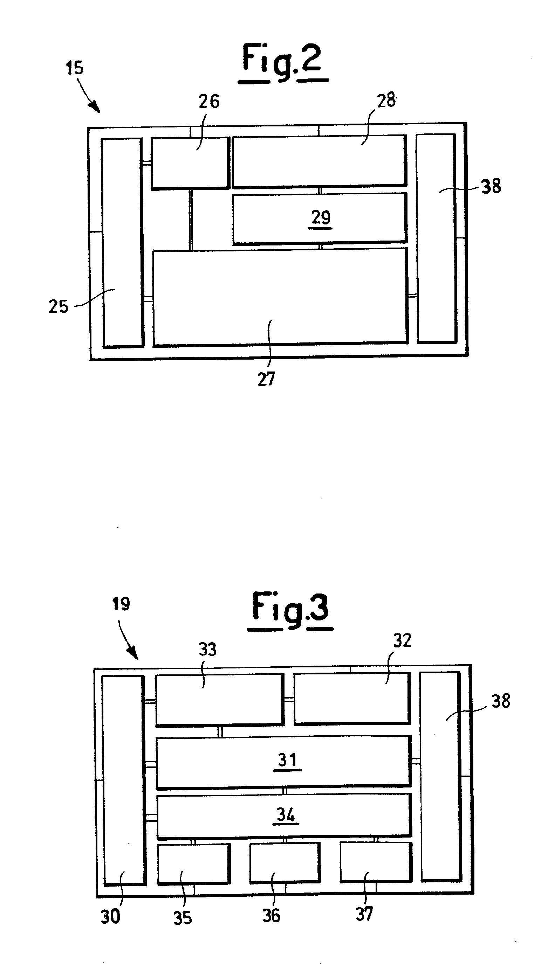

In particular, as illustrated in detail in figure 2, the master unit 15 foresees a first supply stage 25, to which an indication device 26 for diagnosing anomalies and/or failures of the electrical system and indicating them to the driver's compartment and a CPU 27 are connected, to which the command signals 28 coming from the tractor are sent, mediated by means of a conditioning apparatus of the signals 29.

In the same way, the electronic slave unit 19, as schematically illustrated in figure 3, includes a first supply circuit block 30, connected to a CPU 31, which receives in input the local signals 32, mediated by a conditioning apparatus of the signals 33. The CPU 31 is further connected to a control device 34 of the status of the outputs 35, 36, 37 relative, respectively, to the electrovalves of the trailer and to the left and right optical groups 12 and 13.

The electronic master and slave units 15 and 19 communicate by means of the three pole cable 20, connected between one unit and the next by means of "Lin-Bus" interfacing devices 38. The system, in particular, is based upon serial communication using a single wire, as well as mass communication, between the two microcontrollers of the CPUs 27, 31.

The physical level of communication is realised by the serial bus known as "Lin-Bus", or else codified as ISO 9137, from a regulative point of view. The software communication protocol is, on the other hand, of the owner type, or else realised ad hoc for the present application.

Preferably, finally, the two electronic boards of the CPUs 27, 31 are managed by a Motorola microcontroller of the HC08 series, with on-board flash memory, and thus they are "in circuit" reprogrammable. The management and communication software can also advantageously be realised in C language.

The method of installation of the management system object of the present invention allows the drawbacks present in conventional systems to be avoided.

Indeed, the reduced number of connections, all already equipped with suitable connectors, allows a substantial simplification in the installation work of the unit, consequently allowing a clear reduction in overall costs.

In practice, the assembly operations are limited to the need to insert a few connectors and to pass only two cables along the trailer. In particular, it is sufficient to install a metal strip 18 with two poles along the entire perimeter of the trailer and a three pole cable 20, which connects two units 15, 19 together arranged at the two ends of the trailer itself.

Precisely due to the structure of the system, it is clear that the diversity of the units, based upon length, is reduced to the minimum. All of this since the metal strip 18, which is distributed along the perimeter of the trailer, can be provided in windings, so that the cable layer can cut it to a length necessary for the specific trailer or semi-trailer, without the need to have to realise joints or other particular terminals.

According to preferred embodiments of the invention, the three pole cable indicated with 20 in figure 1 is, on the other hand, produced in two or three different lengths. Such a characteristic allows the installation requirements of most models of trailer or semi-trailer to be satisfied, however if the length is too long, it may be sufficient to fold it suitably.

From the description which has been made the characteristics of the electronic management system for lighting units and auxiliary services for trailers and semi-trailers, which is object of the present invention, are clear, just as the advantages are also clear.

In particular, they are represented by:
- easy and fast assembly;
- management of a single unit for all trailers or semi-trailers;
- simplicity of installation in the addition of inputs and/or outputs for the electrical connection of possible future devices;
- possibility of operation of the system in "intelligent" ways (for example, in the case in which a bulb blows, the system can replace it with another function);
- extreme reliability of use, since it is possible to use for communication signal transfer buses which are already present inside determined vehicles to carry out other functions;
- possibility of indicating and/or informing the operator of possible failures of bulbs or electrovalves of the electrical system, by means of a panel installed in the driver compartment, used to highlight in detail the type of failure, or else through a simple pilot light or sound alarm;
- standardisation of the components for effective use on all types of trailer and semi-trailer;
- extremely low labour and production costs, with respect to systems currently in use.

Finally, it is clear that numerous other variants can be brought to the electronic management system in question, without for this reason departing from the novelty principles inherent to the inventive idea, just as it is clear that, in the practical embodiment of the invention, the materials, the shapes and the sizes of the illustrated details can be whatever according to requirements and they can be replaced with others which are technically equivalent.

## Claims

1. Electronic management system for lighting units and auxiliary services for trailers and semi-trailers, of the type comprising electrical connection means to the side-markers (10) and/or back-markers (11) and to the optical groups (12, 13, 14) of a trailer or semi-trailer, **characterised in that** said electrical connection means comprises at least one first conductor (18), which crosses the entire perimeter of the trailer and to which said side markers (10) and/or back-markers (11) are connected, by means of connectors (21), said first conductor (18) being electrically connected to a first electronic management unit (15), arranged at the front of the trailer, connected, by means of at least one cable (20), to a second electronic management unit (19), positioned at the back of the trailer, which includes a series of electrical connectors (22, 23, 24) to said optical groups (12, 13, 14) of the trailer.

2. Electronic management system according to claim 1, **characterised in that** said first electronic management unit (15), of the master type, foresees a first series of electrical connectors (16) for the connection to the tractor of the trailer and a second series of connectors (171) for the electrical connection of said side-markers (10).

3. Electronic management system according to claim 1, **characterised in that** said side-markers (10) and/or back-markers (11) are electrically connected, through derivation terminal, to said first conductor (18).

4. Electronic management system according to claim 1, **characterised in that** said first conductor (18) consists of a metal strip with two poles, which runs along the entire perimeter of the trailer.

5. Electronic management system according to claim 1, **characterised in that** the number plate lights (14) of said trailer are also electrically connected to said first conductor (18).

6. Electronic management system according to claim 1, **characterised in that** said second conductor (20) for electrical connection between said first (15) and second (19) electronic management units consists of a three pole cable.

7. Electronic management system according to claim 1, **characterised in that** said second electronic management unit (19) includes a first series of connectors (22), to which a first optical group (12) of the trailer is connected, and a second series of connectors (23), to which a second optical group (13) of the trailer is electrically connected, said second electronic unit (19) foreseeing further connectors (24), capable of being used for the connection of self-steering and lifting electrovalves of the trailer, and auxiliary inputs and/or outputs.

8. Electronic management system according to claim 1, **characterised in that** said first electronic management unit (15) comprises a first supply stage (25), to which an indication device (26) for diagnosing anomalies and/or failures of the electrical system and indicating them to the driver's compartment and a first CPU (27) are connected, to which the command signals (28) coming from the tractor are sent, mediated by means of a conditioning apparatus of the signals (29).

9. Electronic management system according to claim 1, **characterised in that** said second electronic management unit (19), of the slave type, includes a supply circuit block (30), connected to a second CPU (31), which receives in input the local signals (32), mediated by a conditioning apparatus of the signals (33), said second CPU (31)being further connected to a control device (34) of the status of the outputs (35, 36, 37) relative, respectively, to the electrovalves of the trailer and to said optical groups (12, 13).

10. Electronic management system according to claims 8 and 9, **characterised in that** said electronic management units (15, 19) communicate by means of interface devices (38), through a serial communication using a single wire, as well as mass communication, between the two microcontrollers of said CPUs (27, 31).
